(19) **Europäisches Patentamt / European Patent Office / Office européen des brevets**

(11) **EP 2 427 334 B1**

(12) **EUROPEAN PATENT SPECIFICATION**

(45) Date of publication and mention
of the grant of the patent:
**19.04.2017 Bulletin 2017/16**

(21) Application number: **10719857.4**

(22) Date of filing: **06.05.2010**

(51) Int Cl.:
***B32B 27/32*** *(2006.01)*

(86) International application number:
**PCT/US2010/033842**

(87) International publication number:
**WO 2010/129751 (11.11.2010 Gazette 2010/45)**

(54) **HEAT SEALABLE AND ORIENTED MULTI-LAYER POLYPROPYLENE-BASED FILMS FOR SHRINK APPLICATIONS**

HEISSSIEGELBARE UND ORIENTIERTE MEHRSCHICHTIGE FOLIEN AUF POLYPROPYLEN-BASIS FÜR SCHRUMPFANWENDUNGEN

FILMS DE POLYPROPYLÈNE MULTICOUCHES THERMOSCELLABLES ET ORIENTÉS POUR APPLICATIONS RÉTRACTABLES

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **08.05.2009 US 176598 P**

(43) Date of publication of application:
**14.03.2012 Bulletin 2012/11**

(73) Proprietor: **Dow Global Technologies LLC Midland, MI 48674 (US)**

(72) Inventors:
• **ARROYO VILLAN, Maria**
**E-43007 Tarragona (ES)**
• **PATEL, Rajen**
**Lake Jackson, TX 77566 (US)**
• **HATLEWICK, Julie**
**Saginaw, MI 48603 (US)**
• **MCGEE, Robert**
**Midland, MI 48642 (US)**
• **SKAPIK, Stephen**
**Columbus, OH 43221 (US)**

(74) Representative: **Beck Greener**
**Fulwood House**
**12 Fulwood Place**
**London WC1V 6HR (GB)**

(56) References cited:
**WO-A1-96/33864      WO-A1-2006/111448
WO-A1-2007/058783    US-A- 5 443 895
US-A1- 2002 192 483  US-A1- 2006 246 308
US-B2- 6 919 407**

**Description**

Field of the Invention

The present invention relates to heat-sealable oriented shrink multi-layer film comprising a first and a second skin layer, each skin layer comprising homopolymer polypropylene and at least one core layer comprising a propylene-based plastomer or elastomer ("PBPE"). The films are preferably primarily oriented in either the machine or the cross direction. These films are ideally suited for use as a shrink label which can be applied either as a CD shrink sleeve or applied using a continuous roll process. The films ideally have an overall density of less than 1.0 $g/cm^3$, to facilitate recycling efforts using aqueous floatation separation techniques.

Background and Summary of the Invention

Shrink labels generally fall into two categories: roll-on shrink-on (ROSO) labels, and sleeve-type labels (sleeve labels). ROSO labels are film sheets that wrap around a container. Sleeve labels are tubular in configuration and fit around a container by placement over the container. Application of heat to a shrink label that is around a container causes the label to shrink and conform to the container.

To conform to a container, each type of label must shrink preferentially (*i.e.*, to a greater extent in one direction than in another direction) in the direction extending circumferentially around the container. ROSO films reside on a container with the machine direction (MD) of the film extending circumferentially around the container. Hence, ROSO films primarily shrink in the film's machine direction (MD) due to preferential machine direction orientation (MDO). In contrast, sleeve labels typically reside on a container with the label's transverse direction (TD) (also known as the cross direction or "CD") extending circumferentially around the container. Hence, sleeve labels shrink primarily in the film's transverse direction (TD) due to preferential transverse direction orientation (TDO). Whether the film is MDO, or TDO, it is preferred that the films exhibit relatively little shrinkage in the cross direction (that is the direction 90° perpendicular to the direction of preferential orientation).

ROSO labels are particularly desirable over sleeve labels because they entail less processing and are less costly to produce. ROSO labels are typically in roll form resulting from printing onto an oriented film in a continuous web process. In contrast, sleeve labels, while also available in roll form, require printing, cutting and gluing into sleeves prior to rolling into roll form, complicating the manufacturing process and increasing manufacturing costs for sleeve labels relative to ROSO labels. Furthermore, orienting films in the TD for sleeve labels tends to be more expensive due to the relatively higher cost of the equipment than orienting films in the MD for ROSO labels. Additionally, ROSO application of ROSO labels to containers is typically a faster process than application of sleeve labels.

While ROSO labels offer advantages in production speed, sleeve labels historically have enjoyed an advantage in extent of shrinkage around a container. Sleeve labels typically shrink up to 70 percent (%) around the circumference of a container. In contrast, typical ROSO films currently are made predominantly from oriented homopolymer polypropylene, a polymer with relatively higher crystallinity. These materials demonstrate only up to about 20% shrinkage around the circumference of a container, unless the film is heated to a temperature above the homopolymer polypropylene's crystalline melt temperature. Sleeve labels further offer the advantage of having either no glue joint or have a glue joint that is extensively cured prior to application to a container, and so can tolerate a greater extent of stress during shrinkage. At the higher temperatures needed to shrink oriented homopolymer polypropylene films more than 20%, the hot melt adhesives, UV adhesive, or organic solvents typically used to make the seam can fail and the label to unwrap from around the container. It would be desirable to avoid the use of such sealant materials altogether.

Additionally, when homopolymer polypropylene is oriented in a single direction, the film exhibits a propensity to split in the direction of orientation. Therefore, some amount of biaxial orientation often is applied to achieve a more durable film but this can cause undesirable cross-direction shrinkage. Thus it would be desirable to have a durable film which did not require biaxial orientation.

In contrast to films made with such materials as copolyester, polystyrene and polyvinyl chloride (PVC), use of polypropylene-based films also facilitates bottle and label recyclability, as the lower density of the polypropylene materials allows the label to be more easily separated from the higher density (*e.g.*, polyester) bottles. It would be even more beneficial for recyclability if the density of the shrink film were less than 1.0 g/cc as this would allow flotation separation techniques.

Furthermore, lower density films advantageously provide a higher film yield, or more area/lb. of film. Higher density label stock, such as copolyester or PVC films, do not provide similar advantages.

It is desirable to have an oriented, multi-layer film that is suitable for ROSO or shrink sleeve label applications.

Accordingly, in a first aspect, the present invention is an oriented, multi-layer shrink film comprising (a) a first skin layer comprising from 50% to 100% by weight of the skin layer of a propylene-based polymer having a melting point greater than 130°C; (b) at least one core layer comprising from 30% to 100% by weight of the core layer of a propylene-based plastomer or elastomer, said propylene-based plastomer or elastomer comprising at least one copolymer comprising at least 50 weight percent of units derived from propylene and from 4 to 15 % by weight of units derived from ethylene; and (c) a second skin layer comprising from 50% to 100% by weight of the skin layer of a propylene-based polymer having a melting point greater than 130°C. The multi-layer film can be preferentially oriented in the machine direction, for example using a set of MDO rolls, or in the cross direction, for example using the tenter frame process. The propylene-based plastomer or elastomer used in the at least one core layer preferably can be selected to control the shrink tension of the film and shrinkage of the film depending on the requirements of the intended application.

In another aspect, the present invention is a shrink label comprising a multi-layer film of the first aspect wherein the film has printing on one or both sides.

## DETAILED DESCRIPTION OF THE INVENTION

Oriented, multi-layer shrink films of the present invention comprise a first and a second skin layer, with each skin layer comprising from 50% to 100% by weight of the skin layer of homopolymer polypropylene and at least one core layer comprising from 75% to 100% by weight of the core layer of a propylene-based plastomer or elastomer.

Optionally, the multi-layer films may comprise one or more other layers between the skin layers and the polyolefin layer.

A. Skin Layers

Each skin layer comprises from 50% to 100% by weight of the skin layer of propylene-based polymer having a melting point greater than 125°C. The propylene-based polymer preferably has a melting point of from about 125° C to about 170° C, more preferably 130C to 165°C, and most preferably from 135°C to 160°C.

The propylene-based polymer can advantageously be homopolymer polypropylene or a random propylene-based copolymer (for purposes of this application "copolymer" includes terpolymers). The preferred homopolymer or random copolymer polypropylene preferably has a melt flow rate (as measured according to ASTM D1238, 2.16 kg, 230°C) of from 1 to 30 g/10 min, more preferably 5 to 10., most preferably greater than, or equal to, 8 to 10 g/10 min.

The homopolymer polypropylene can be an isotactic polypropylene homopolymer having an isotacticity of from about 89 to 99%(as measured by $^{13}$C NMR spectroscopy using meso pentads).

The preferred homopolymer or random copolymer polypropylene used in the skins has a density greater than, or equal to, 0.89 g/cc and can be up to preferred maximum of 0.91 g/cm.

The preferred homopolymer or random copolymer polypropylene used in the skins has a MWD greater than, or equal to, 3.5, preferably greater than, or equal to, 4.0 or even 4.5.

The preferred homopolymer or random copolymer polypropylene used in the skins of the films of the present invention may advantageously be produced using Ziegler-Natta or metallocene catalysts.

Preferably each skin layer comprises at least 80% homopolymer polypropylene or random copolymer polypropylene, more preferably at least 90% homopolymer polypropylene or random copolymer polypropylene and can advantageously comprise essentially all of the polymer material used in the skin layer.

Examples of suitable homopolymer polypropylene include DX5E66, or H357-09RSB produced by The Dow Chemical Company and examples of suitable random copolymer polypropylene include DS6D21 DS6D81 also produced by The Dow Chemical Company.

When the skin layer comprises one or more resins other than the homopolymer propylene or random copolymer polypropylene, the other resins should be selected so that they are compatible with the homopolymer polypropylene or random copolymer polypropylene and can advantageously provide a lower shrinkage temperature, Suitable resins include propylene-based plastomer or elastomers as described below.

The skin layer may contain other additives such as mineral oil or other plasticizers. Other additives generally known in the art include materials such as inorganic fillers, conductive fillers, pigments, antioxidants, acid scavengers, flame retardants, ultraviolet absorbers, processing aids such as zinc stearate, extrusion aids, slip additives, permeability modifiers, anti-static agents, antiblock additives and other thermoplastic polymers.

Also, it is contemplated that combinations of two or more propylene-based polymers having a melting point greater than 130°C (such as the preferred homopolymer polypropylene polymers and/or or random copolymer polypropylenes) may be used in one or both skin layers. The skin layers will each preferably comprise from about 5 percent by volume to about 25 percent by volume of the overall film thickness. More preferably each skin layer will comprise no more than 10%, or even 5% of the total film thickness.

The composition used for the skin layers can be the same for each of the skin layers or they may be different.

B) Core layer

The multi-layer films of the present invention also contain a core layer which comprises a propylene-based plastomer or elastomer or "PBPE". PBPEs comprise at least one copolymer with at least about 50 weight percent of units derived from propylene and at least about 4 weight percent of units derived from a comonomer other than propylene. Suitable propylene-based elastomers and/or plastomers are taught in US patents 6,906,160; 6,919,407; 6,927,256; 6,960,635; 7,250,470; 7,250,471; and 7,344,775, each of which is hereby incorporated by reference in its entirety.

Of particular interest for use in the present invention are reactor-grade PBPEs having MWD between 2 to 4. It is intended that the term "reactor-grade" is as defined in US Patent 6,010,588 and, in general, refers to a polyolefin resin whose molecular weight distribution (MWD) or polydispersity has not been substantially altered after polymerization. The preferred PBPE will have a heat of fusion (as determined using the DSC method described in published US application 2008/0199673) less than about 90 Joules/gm, preferably less than about 70 Joules/gm, more preferably less than about 50 Joules/gm. The PBPEs used in the core layer will comprise ethylene as the comonomer. The preferred PBPEs will have from about 4 to about 15 percent of ethylene, or from about 4 to about 12 percent of ethylene, or about 4 to 9 percent ethylene, by weight of the propylene-based elastomer or plastomer.

In general, the non-propylene units of the propylene copolymer, PBPEs, are derived from at least one other comonomer including ethylene, a $C_{4-20}$ $\alpha$-olefin, a $C_{4-20}$ diene, a styrenic compound and the like. Preferably the comonomer is at least one of ethylene and a $C_{4-12}$ $\alpha$-olefin such as 1-hexene or 1-octene. Preferably, the remaining units of the copolymer are derived only from ethylene, particularly for the PBPEs used in the core layer.

The amount of comonomer in the propylene-based elastomer or plastomer is a function of, at least in part, the type of comonomer and the desired heat of fusion of the copolymer. If the comonomer is ethylene, then typically the comonomer-derived units comprise not in excess of about 15 wt % of the copolymer. If the polymer comprises at least one other comonomer other than ethylene, then the preferred composition would have a heat of fusion approximately in the range of a propylene-ethylene copolymer with about 4 to 15 wt.% ethylene.

The propylene-based plastomer or elastomer of this invention can be made by any process preferably by the solution process, and includes copolymers made by metallocene, a non-metallocene, metal-centered, heteroaryl ligand catalysis, or a metal complex of a polyvalent aryloxyether. These copolymers include random copolymers. Exemplary propylene copolymers include Exxon-Mobil VISTAMAXX™ polymer, and VERSIFY™ propylene/ethylene elastomers and plastomers by The Dow Chemical Company.

The density of the propylene-based elastomers or plastomers of this invention is typically at least about 0.850, can be at least about 0.860 and can also be at least about 0.865 grams per cubic centimeter ($g/cm^3$) as measured by ASTM D-792. Preferably the density is less than about 0.89 g/cc.

The weight average molecular weight (Mw) of the propylene-based elastomers or plastomers of this invention can vary widely, but typically it is between about 10,000 and 1,000,000 alternatively between about 50,000 and 500,000 or between 100,000 and 250,000 (with the understanding that the only limit on the minimum or the maximum $M_w$ is that set by practical considerations such as as processability.

The polydispersity of the propylene-based elastomers or plastomers of this invention is typically between about 2 and about 4. "Narrow polydispersity", "narrow molecular weight distribution", "narrow MWD" and similar terms mean a ratio ($M_w/M_n$) of weight average molecular weight ($M_w$) to number average molecular weight ($M_n$) of less than about 3.5, can be less than about 3.0, can also be less than about 2.8 or even 2.5.

The PBPEs for use in the present invention ideally have an MFR of from 0.5 to 500 g/10min, preferably from about 1 to 20, more preferably from about 2 to 10. The particular MFR selected will depend in-part on the intended fabrication methods such as blown film, extrusion coating, sheet extrusion, injection molding, or cast film processes. MFR for copolymers of propylene and ethylene and/or one or more $C_4$-$C_{20}$ $\alpha$-olefins is measured according to ASTM D-1238, condition L (2.16 kg, 230 degrees C).

MFRs greater than about 250 were estimated according to the following correlation:

$$MFR = 9 \times 10^{18} Mw^{-3.3584}$$

Mw (grams per mole) was measured using gel permeation chromatography.

The PBPE can also be characterized in terms of its melting point($T_m$). The determination of the melting point is performed using a differential scanning calorimeter (DSC). The temperature at the maximum heat flow rate with respect to a linear baseline was used as the melting point as measured by DSC. The temperature is raised from room temperature to 200°C at 10°C/min, maintained at 200°C for 5 min, decreased to 0°C at 10°C/min, maintained at 0°C for 5 min and then the temperature is raised from 0°C to 200°C at 10°C/min. The melting and cooling curves are recorded. When plural melting peaks are present, the melting peak at the maximum temperature is used as the melting point. Further information about this method may be seen in WO 2005/090427, incorporated herein by reference. The PBPE should have a DSC melting point in the range of from 50°C to 120°C, more preferably greater than or equal to about 80°C.

The core layer preferably comprises from 30 to 100% by weight of the PBPE, alternatively at least 40%, 50%, 60%, 80% PBPE, 90% PBPE and can, in some applications, advantageously comprise essentially all of the polymer material used in the core layer. In general higher amounts of the PBPE in the core will give higher shrinkage at a given shrink temperature, but will tend to reduce bending stiffness.

When the core layer comprises one or more resins other than the PBPE, the other resins should be selected so that they are compatible with the PBPE and can advantageously be used to increase the stiffness of the films. Suitable resins for use with the PBPE in the core layer include random copolymer polypropylene.

The core layer may contain other additives such as mineral oil or other plasticizers. Other additives generally known in the art include materials such as inorganic fillers, conductive fillers, pigments, antioxidants, acid scavengers, flame retardants, ultraviolet absorbers, processing aids such as zinc stearate, extrusion aids, slip additives, permeability modifiers, anti-static agents, antiblock additives and other thermoplastic polymers.

It is also contemplated that combinations of two or more PBPE polymers may be used in the core layer. The core layer will preferably comprise from about 50 percent by volume to about 90 percent by volume of the overall film thickness. More preferably the core layer will comprise at least 60%, 70% or even 80% of the total film thickness.

Overall Film

It is preferred that the resins for each of the layers present in the multi-layer film such that the overall density of the film is less than 1.0 g/cm$^3$, more preferably less than 0.95 g/cm$^3$, most preferably less than 0.92 g/cm$^3$ as determined by ASTM D-792.

Films of the present invention are oriented which means that they have monoaxial orientation or biaxial orientation with preferential orientation either in the machine direction (MD) or the cross direction (CD). Preferential orientation means that orientation is greater in the machine or cross direction than in the other direction. The degree of orientation is at least 2x, preferably at least 3x and most preferably at least 4x in either the MD or CD depending on the shrinkage direction desired. Oriented shrink films of the present invention will generally have a shrink tension greater than about 50 psi, preferably more than 100psi at 135°C. There is no clear upper limit for MDO ratio, although films typically have a MDO ratio of 20 or less. Films having an MDO ratio greater than 20 risk shrinking around a container in a ROSO label application with such a high force that a glue seam holding the label around the bottle can weaken or fail. This is also true for TDO ratio in shrink sleeve applications.

Measure MDO ratio for a MD oriented ROSO label by using a sample which is 10 cm long in MD and 2.5 cm in TD Place the sample in a hot oil bath (ASTM D2732) kept at least 10 degrees C above the melting point of the highest melting resin in the film. for 30 seconds Then measure MD dimension again. The ratio of pre- to post-heated MD dimensions correspond to MDO ratio.

Measure TDO ratio for a TD oriented shrink sleeve label by using a sample which is 10 cm long in TD and 2.5 cm in MD Place the sample in a hot oil bath (ASTM D2732) kept above the melting point of the highest melting resin in the film. Then measure TD dimension again. The ratio of pre- to post-heated TD dimensions correspond to TDO ratio.

The multi-layer films of the present invention can be made conveniently before the orientation step using the cast film process, the blown film process, the extrusion coating process or lamination process, with the cast film process being preferred.

The film temperature during drawing/orientation used in the film manufacturing process can be chosen to help control the shrink tension. Preferably the film draw temperature is between about 60°C and 150°C, more preferably between 70°C and 127°C.

When MD orientation is desired it may be achieved conveniently using a set of MDO rolls. When CD orientation is desired, it may be achieved conveniently using the tenter frame process. These procedures and others for achieving orientation are well-known in the art.

Particularly when the multi-layer films of the present invention are to be used in a ROSO label, the film should have a shrink tension less than about 500 psi, more preferably less than 400 psi, more preferably less than 300 psi, and most preferably less than about 250 psi. Sleeve labels can tolerate higher shrink tension. Shrink tension is determined according to ASTM D-2838.

Films of the present invention desirably demonstrate a shrinkage under normal shrink label application temperatures (e.g. from 80°C to 140°C) in the preferred orientation direction (when oriented at a temperature from 70°C to 130°C) of 20% or more, preferably 30% or more, more preferably 40% or more, still more preferably 50% or more, yet more preferably 60% or more, even yet more preferably 70% or more in the oriented direction. Shrinkage below 20% tends to undesirably limit the extent to which a film can conform to a container contour. While an upper limit on the extent of shrink is unknown, it will be below 100%.

Desirably, the films demonstrate a shrinkage under normal shrink label application temperatures (e.g. from 80°C to 140°C) in the direction opposite that of the preferential orientation (when oriented at a temperature from 70°C to 130°C) of 10% or less , even more preferably 5% or less. It should be understood that "less than 5%" shrinkage also includes growth, although the growth should be minimized.

The stiffness (bending stiffness) of the multi-layer films of the present invention is important among other reasons, for proper dispensing of ROSO labels at high line speeds. The stiffness of the oriented multi-layer films in the preferred orientation direction should be at least about 10 Gurley units (1 Gurley unit is equivalent to 1 mg of force as measured by the Gurley apparatus) and, generally, may be as high as 50 Gurley units. More often, the stiffness of the oriented multi-layer films is in the range of about 10 to 30 Gurley units, 12 to 28 Gurley units, or most preferably 15 to 20 Gurley units as measured in accordance with the TAPPI Gurley stiffness test T543pm.

Although the films may have any desired thickness, the films of the present invention will generally have an overall thickness of 10 $\mu$m or more, preferably 25 $\mu$m or more and, generally, 254 $\mu$m or less, preferably 101 $\mu$m, or even 51$\mu$m or less. At a thickness of less than one mil (25 $\mu$m), films tend to be undesirably difficult to cut during processing and handling. Thicknesses greater than 4 mils (100 $\mu$m) are technically achievable, but generally economically undesirable.

Films of the present invention desirably have a shrink tension or orientation release stress (ORS) of 500 psi (2758 kPa) or less more preferably less than 400 psi, more preferably less than 300 psi, and most preferably less than about 250 psi. Shrink tension is determined according to ASTM D-2838. ORS is a measure of the stress the film experiences during shrinkage upon heating. Lowering ORS values in a ROSO film is desirable. ROSO films typically have at least one end glued to a container around which the film is applied. Labels with high ORS values can apply sufficient stress to a glued seam holding the label around a container during shrinkage so as to damage or break the seam. Lowering ORS values decreases the likelihood that the seam line (film on film) becomes damaged or broken during shrinkage.

Typical methods known in the art for making the seam in ROSO films can also be used with the films of the present invention. These include the use of adhesives such as hot melt adhesives and UV curable adhesives, and heat-sealing the seam such as by use of laser radiation.

Films of the present invention have utility in any application that benefits from heat-triggered shrinkage in the MD or TD. The films have a particular utility as ROSO labels. To convert a film of the present invention into a ROSO label of the present invention, cut the film to a desirable width and corona treat a side of the film (in any order) and then print on the corona-treated side of the film. Printing can reside on the "reverse" side of the film to create a reverse-printed label. The reverse side of the film resides against a container and printing on the reverse side is viewed through the film when the film is around a container in a ROSO label application. These steps are typically done on a continuous web process by any method useful in the art.

Depending on the particular end-use application, films and labels of the present invention also can advantageously possess perforations through the film or label. Perforations are most desirably located in the portion of a film proximate to the narrowest portion or portions of a container around which the film is applied in a ROSO application. The perforations allow gas that would otherwise tend to become trapped between the label and container to escape, thereby allowing the label to more tightly conform to the container. Films, and labels, of the present invention can contain perforations uniformly distributed across a film surface or contain perforations specifically located proximate to the areas of the film (or label) that will coincide with the narrowest portions of a container around which the film (or label) will reside. Perforation of films and labels of the present invention can be performed at any time; however, in order to facilitate printing of ROSO labels, desirably perforate films and labels after printing.

The following examples serve as an illustration of the present invention and are not intended to serve to establish the full scope of the present invention.

<u>EXAMPLES</u>

The materials used in the following Examples are listed in TABLE #1, along with key properties.

**TABLE # 1: Resins and physical properties**

| Resin | Density (g/cc) | ☐Hf (J/g) | Melting point | Melt Flow Rate (g/10min, 230C/2.16kg) | Type |
|---|---|---|---|---|---|
| A | 0.9 | | 163°C | 8.5 | Homo Polypropylene |
| B | 0.9 | | 163°C | 8.8 | Homo Polypropylene |
| C | 0.876 | 70 | 115°C | 8.0 | Propylene-based Elastomer or Plastomer with 5% by weight ethylene |

(continued)

| Resin | Density (g/cc) | $\Delta$Hf (J/g) | Melting point | Melt Flow Rate (g/10min, 230C/2.16kg) | Type |
|---|---|---|---|---|---|
| D | 0.888 | 44.5 | 98°C | 8.0 | Propylene-based Elastomer or Plastomer with 9% by weight ethylene |
| E | 0.9 | 80 | 133°C | 7.0 | Random polypropylene copolymer witch 5.7 % by weight ethylene |

The materials are then used to make precursor film (that is film which has not yet been substantialy oriented) as described in Table # 2. The films are fabricated on a coextrusion Collin CR 136/350 cast film line. For the fabrication of 3-layer films the line consists of three extruders. Skin layers are formed using extruder type E25M, and the core layer is formed using extruder type E30M. The die gap was 0.25 mm. Each film had a thickness of 150 microns.

**TABLE # 2**

| Example # | Skins | Core | Layer Ratio (Skin/Core/Skin) |
|---|---|---|---|
| 1 | A | D | 5/90/5 |
| 2 | A | D | 10/80/10 |
| 3 | A | D | 15/70/15 |
| 4 | A | D | 20/60/20 |
| 5 | A | C | 5/90/5 |
| 6 | A | C | 10/80/10 |
| 7 | A | C | 20/60/20 |

Samples measuring 120mm x 120mm of the precursor shrink films described in Table # 2 are MDO uniaxialy stretched on a Lab Stretcher Karo IV from Bruckner to a final film thickness of 50 microns, under the following conditions:

Stretch Temperature: 70°C
Preheating Time: 60sec
Stretch ratio: 3.5 to 1
Stretching speed, SET at 5m/min

The resulting oriented shrink films are evaluated for Shrinkage, Tensile Strength, bending stiffness and Secant Modulus. Results are described in Table # 3.
Methods used on properties described in Table # 3 are as follow:

Shrinkage (Machine or Cross), according to ASTM D2732
Tensile, according to ASTM D882
Bending stiffness according to TAPPI Gurley stiffness test T543pm
Secant Modulus, according to ASTM D882

**Table # 3**

| | | Example # | | | | | | |
|---|---|---|---|---|---|---|---|---|
| PROPERTY | Units | 1 | 2 | 3 | 4 | 5 | 6 | 7 |
| Thickness | microns | 47.7 | 48.2 | 49.2 | 49.3 | 51.7 | 49.4 | 53.1 |
| Stress at Break, MD | Mpa | 79.35 | 73.36 | 75.78 | 78.65 | 89.2 | 87.82 | 87.32 |
| Strain at Break, MD | Mpa | 93.18 | 118.98 | 79.74 | 94.36 | 88.64 | 75.2 | 54.96 |
| Toughness, MD | Mpa | 52.13 | 61.06 | 46.49 | 57.21 | 66.24 | 56.09 | 40.23 |
| 1% sec Modulus, MD | Mpa | 112.9 | 339.4 | 522.2 | 664 | 682.8 | 722 | 920.4 |
| 2% sec Modulus, MD | Mpa | 147.4 | 283.1 | 432.1 | 525.7 | 607 | 629.6 | 777.3 |

(continued)

| PROPERTY | Units | Example # | | | | | | |
|---|---|---|---|---|---|---|---|---|
| | | 1 | 2 | 3 | 4 | 5 | 6 | 7 |
| Bending stiffness MD | Gurley units (mg) | 9.5 | 16.6 | 18.8 | 18.5 | 24.2 | 19.7 | 27.1 |
| Bending stiffness TD | Gurley units (mg) | 5.9 | 10.7 | 11 | 9.3 | 19.9 | 9.1 | 14.6 |
| Shrink at 60°C, MD | % | 21 | 7 | 6 | 4 | 4 | 2 | 2 |
| Shrink at 70°C, MD | % | 40 | 20 | 14 | 8 | 10 | 8 | 5 |
| Shrink at 80°C, MD | % | 50 | 32 | 20 | 12 | 17 | 7 | 6 |
| Shrink at 90°C, MD | % | 55 | 41 | 22 | 14 | 25 | 18 | 12 |
| Shrink at 90°C, CD | % | -2 | | | 0 | 0 | 0 | 0 |
| Load at 40% Shrink, MD | mN | 2150 | 1780 | na | na | 2500 | na | na |

**Example 8**:

Another precursor film is made with resin B as the skins and resin C as the core in a 5/90/5 ratio. The film is fabricated on a Cast Coextrusion Line using 3 extruders (3.5 inches, 4.5 inches, and 3.5 inches in diameter) with an 86 inch wide die. The film is cast onto a temperature controlled smooth cast roll to a thickness of approximately 174 microns.

The precursor shrink film is then MDO uniaxialy stretched on a secondary process unit to orient the film to a final film thickness of 38 microns. The stretching temperature was set at 200°F (93°C) with an initial line speed of 10 m/min, a final line speed of 58 m/min and an MD stretch ratio of 5.8:1.

The resulting oriented film is evaluated for Tensile Strength, Secant Modulus and Shrinkage in Hot Air by drawing a 100 mm circle on a test piece and placing the sample into a preheated forced air oven for 10 minutes at the prescribed temperature. Results are described in Table # 4.

**Table # 4: Physical properties of Example 8 After Orientation**

| Property | | stdev |
|---|---|---|
| Thickness, mils | 38 | 1.0 |
| Break Stress. MD, MPa | 154 | 8.0 |
| Strain at Break, MD, % | 35 | 2.0 |
| Toughness, MD, MPa | 44 | 2.3 |
| 1% Secant Modulus, MD, MPa | 1345 | 10.2 |
| Free Air Shrink, 60°C, MD, % | 2.0 | --- |
| Free Air Shrink, 60°C, TD, % | -1.0 | --- |
| Free Air Shrink, 80°C, MD, % | 15.0 | --- |
| Free Air Shrink, 80°C, TD, % | -1.7 | --- |
| Free Air Shrink, 90°C, MD, % | 18.0 | --- |
| Free Air Shrink, 90°C, TD, % | -2.0 | --- |
| Free Air Shrink, 100°C, MD, % | 26.3 | --- |
| Free Air Shrink, 100°C, TD, % | -2.0 | --- |
| Free Air Shrink, 110°C, MD, % | 53.3 | --- |
| Free Air Shrink, 110°C, TD, % | -3.0 | --- |

**Example 9**

Another precursor film is made with resin E as the skins and resin C as the core in a 10/80/10 ratio. The film is fabricated on a Cast Coextrusion Line using 3 extruders (2.0 inches, 2.5 inches, and 2.0 inches in diameter) with a 28 inch wide die. The film is cast onto a temperature controlled smooth cast roll to a thickness of approximately 254 microns.

The precursor shrink film is then MDO uniaxialy stretched on a secondary process unit to orient the film to a final film thickness of 44 microns. The stretching temperature was set at 212°F (100°C) with an initial line speed of 10 m/min, a final line speed of 65 m/min and an MD stretch ratio of 6.5:1.

The resulting oriented film is evaluated for Tensile Strength, Secant Modulus and Shrinkage in Hot Air by drawing a 100 mm circle on a test piece and placing the sample into a preheated forced air oven for 10 minutes at the prescribed temperature. Results are described in Table # 5.

**Table # 5: Physical properties of Example 9 After Orientation**

| Property | | | stdev |
|---|---|---|---|
| Thickness, micron | | 43.9 | 2.5 |
| Break Stress. MD, MPa | | 176 | 12 |
| Strain at Break, MD, % | | 35 | 4 |
| Toughness, MD, MPa | | 39 | 7 |
| 1% Secant Modulus, MD, MPa | | 1082 | 13 |
| Free Air Shrink, 60°C, MD, % | | 2.0 | 0 |
| Free Air Shrink, 60°C, TD, % | | 0 | 0 |
| Free Air Shrink, 80°C, MD, % | | 3.7 | 0.6 |
| Free Air Shrink, 80°C, TD, % | | -1.0 | 0 |
| Free Air Shrink, 90°C, MD, % | | 19.7 | 0.6 |
| Free Air Shrink, 90°C, TD, % | | -4.7 | 2.1 |
| Free Air Shrink, 100°C, MD, % | | 26.7 | 0.6 |
| Free Air Shrink, 100°C, TD, % | | -5.7 | 1.5 |
| Free Air Shrink, 110°C, MD, % | | 49.3 | 2.9 |
| Free Air Shrink, 110°C, TD, % | | -10.7 | 3.5 |

## Example 10

Another precursor film is made with resin B as the skins and resin D as the core in a 10/80/10 ratio. The film is fabricated on a Cast Coextrusion Line using 3 extruders (2.5 inches, 2.0 inches, and 2.0 inches in diameter) with a 28 inch wide die. The film is cast onto a temperature controlled smooth cast roll to a thickness of approximately 254 microns.

The precursor shrink film is then MDO uniaxialy stretched on a secondary process unit to orient the film to a final film thickness of 45 microns. The stretching temperature was set at 156°F (69°C) with an initial line speed of 10 m/min, a final line speed of 63 m/min and an MD stretch ratio of 6.3:1.

The resulting oriented film is evaluated for Tensile Strength, Secant Modulus and Shrinkage in Hot Air by drawing a 100 mm circle on a test piece and placing the sample into a preheated forced air oven for 10 minutes at the prescribed temperature. Results are described in Table # 6.

**Table # 6: Physical properties of Example 10 After Orientation**

| Property | | | stdev |
|---|---|---|---|
| Thickness, micron | | 45.2 | 1.3 |
| Break Stress. MD, MPa | | 148 | 3.9 |
| Strain at Break, MD, % | | 40 | 3 |
| Toughness, MD, MPa | | 39.5 | 5.9 |
| 1% Secant Modulus, MD, MPa | | 761 | 19.8 |
| Free Air Shrink, 60°C, MD, % | | 12.0 | 1.0 |

(continued)

| Property | | stdev |
|---|---|---|
| Free Air Shrink, 60°C, TD, % | -2.0 | 1 |
| Free Air Shrink, 80°C, MD, % | 34.3 | 3.2 |
| Free Air Shrink, 80°C, TD, % | -5.0 | 2.0 |
| Free Air Shrink, 90°C, MD, % | 55.3 | 0.6 |
| Free Air Shrink, 90°C, TD, % | -5.0 | 1.7 |
| Free Air Shrink, 100°C, MD, % | 61 | 1.0 |
| Free Air Shrink, 100°C, TD, % | -5.3 | 2.9 |
| Free Air Shrink, 110°C, MD, % | 59 | 2.6 |
| Free Air Shrink, 110°C, TD, % | -4.0 | 2.6 |

**Claims**

1. A multi-layer oriented shrink film comprising:

   a. a first skin layer comprising from 50% to 100% by weight of the skin layer of a propylene-based polymer having a melting point greater than 130°C;
   b. at least one core layer comprising from 30% to 100% by weight of the core layer of a propylene-based plastomer or elastomer, said propylene-based plastomer or elastomer comprising at least one copolymer comprising at least 50 weight percent of units derived from propylene and from 4 to 15 % by weight of units derived from ethylene; and
   c. a second skin layer comprising from 50% to 100% by weight of the skin layer of a propylene-based polymer having a melting point greater than 130°C.

2. The multi-layer film of claim 1 wherein at least one skin layer comprises homopolymer polypropylene.

3. The multi-layer film of claim 1 wherein at least one skin layer comprises random copolymer polypropylene.

4. The multi-layer film of Claim 1 wherein each skin layer comprises at least 80% propylene-based polymer having a melting point greater than 130°C.

5. The multi-layer film of Claim 1 wherein the core layer consists essentially of 100% propylene-based plastomer or elastomer.

6. The multi-layer film of Claim 1 wherein the film has a thickness of from 25 microns to 50 microns.

7. The multi-layer film of Claim 1 wherein each skin layer comprises no more than 5% of the total film thickness.

8. The multi-layer film of Claim 1 wherein the skin layer and/or the core layer further comprise one or more of the following additives: inorganic fillers, conductive fillers, pigments, antioxidants, acid scavengers, flame retardants, ultraviolet absorbers, processing aids, extrusion aids, slip additives, permeability modifiers, anti-static agents, antiblock additives.

9. The multi-layer film of Claim 1 wherein the overall density of the film is from 0.8 to 1.0 g/cm$^3$.

10. The multi-layer film of Claim 1 wherein the film is preferentially oriented in either the machine or the cross direction, and wherein the orientation in one direction is at least twice that of the opposite direction.

11. The multi-layer film of Claim 1 wherein the film has a Gurley Stiffness in the direction of the primary orientation of from 10-30 Gurley units.

**12.** The multi-layer film of Claim 1 wherein the film has a shrink tension less than 250 psi (1.72 MPa).

**13.** A shrink label comprising a multi-layer film of one any of the preceding claims.

**14.** The shrink label of Claim 13 wherein the shrink label is a roll-on shrink-on (ROSO) label.

**15.** The shrink label of Claim 13 wherein the shrink label is a sleeve-type label.

**Patentansprüche**

**1.** Eine mehrschichtige ausgerichtete Schrumpffolie, die Folgendes beinhaltet:

a. eine erste Deckschicht, die von 50 Gew.-% bis 100 Gew.-% der Deckschicht eines auf Propylen basierenden Polymers mit einem Schmelzpunkt von mehr als 130 °C beinhaltet;
b. mindestens eine Kernschicht, die von 30 Gew.-% bis 100 Gew.-% der Kernschicht eines auf Propylen basierenden Plastomers oder Elastomers beinhaltet, wobei das auf Propylen basierende Plastomer oder Elastomer mindestens ein Copolymer, beinhaltend mindestens 50 Gewichtsprozent an von Propylen hergeleiteten Einheiten und von 4 bis 15 Gew.-% an von Ethylen hergeleiteten Einheiten beinhaltet; und
c. eine zweite Deckschicht, die von 50 Gew.-% bis 100 Gew.-% der Deckschicht eines auf Propylen basierenden Polymers mit einem Schmelzpunkt von mehr als 130 °C beinhaltet.

**2.** Mehrschichtige Folie gemäß Anspruch 1, wobei mindestens eine Deckschicht Polypropylen-Homopolymer beinhaltet.

**3.** Mehrschichtige Folie gemäß Anspruch 1, wobei mindestens eine Deckschicht statistisches Polypropylen-Copolymer beinhaltet.

**4.** Mehrschichtige Folie gemäß Anspruch 1, wobei jede Deckschicht mindestens 80 % auf Propylen basierendes Polymer mit einem Schmelzpunkt von mehr als 130 °C beinhaltet.

**5.** Mehrschichtige Folie gemäß Anspruch 1, wobei die Kernschicht im Wesentlichen aus 100 % auf Propylen basierendem Plastomer oder Elastomer besteht.

**6.** Mehrschichtige Folie gemäß Anspruch 1, wobei die Folie eine Dicke von 25 Mikrometer bis 50 Mikrometer aufweist.

**7.** Mehrschichtige Folie gemäß Anspruch 1, wobei jede Deckschicht nicht mehr als 5 % der Gesamtfoliendicke beinhaltet.

**8.** Mehrschichtige Folie gemäß Anspruch 1, wobei die Deckschicht und/oder die Kernschicht ferner einen oder mehrere der folgenden Zusatzstoffe beinhaltet/beinhalten:

anorganische Füllstoffe, leitfähige Füllstoffe, Pigmente, Antioxidationsmittel, Säurefänger, Flammhemmer, Ultaviolettabsorptionsmittel, Verarbeitungshilfsmittel, Spritzbarmacher, Gleitmittel, Durchlässigkeitsmodifiziermittel, Antistatika, Antiblockmittel.

**9.** Mehrschichtige Folie gemäß Anspruch 1, wobei die Gesamtdichte der Folie von 0,8 bis 1,0 g/cm$^3$ beträgt.

**10.** Mehrschichtige Folie gemäß Anspruch 1, wobei die Folie vorzugsweise in entweder der Maschinen- oder der Querrichtung ausgerichtet ist, und wobei die Ausrichtung in einer Richtung mindestens zweimal die der entgegengesetzten Richtung ist.

**11.** Mehrschichtige Folie gemäß Anspruch 1, wobei die Folie eine Gurley-Steifheit in der Richtung der primären Ausrichtung von 10-30 Gurley-Einheiten aufweist.

**12.** Mehrschichtige Folie gemäß Anspruch 1, wobei die Folie eine Schrumpfspannung von weniger als 250 psi (1,72 MPa) aufweist.

**13.** Ein Schrumpfetikett, das eine mehrschichtige Folie gemäß einem der vorhergehenden Ansprüche beinhaltet.

**14.** Schrumpfetikett gemäß Anspruch 13, wobei das Schrumpfetikett ein Roll-on-Shrink-on-Etikett (ROSO-Etikett) ist.

**15.** Schrumpfetikett gemäß Anspruch 13, wobei das Schrumpfetikett ein schlauchartiges Etikett ist.

## Revendications

**1.** Un film rétractable orienté multicouche comprenant :

a. une première couche de peau comprenant de 50 % à 100 % en poids de la couche de peau d'un polymère à base de propylène ayant un point de fusion supérieur à 130 °C ;
b. au moins une couche de coeur comprenant de 30 % à 100 % en poids de la couche de coeur d'un plastomère ou élastomère à base de propylène, ledit plastomère ou élastomère à base de propylène comprenant au moins un copolymère comprenant au moins 50 pour cent en poids d'unités dérivées de propylène et de 4 à 15 % en poids d'unités dérivées d'éthylène ; et
c. une deuxième couche de peau comprenant de 50 % à 100 % en poids de la couche de peau d'un polymère à base de propylène ayant un point de fusion supérieur à 130 °C.

**2.** Le film multicouche de la revendication 1 dans lequel au moins une couche de peau comprend du polypropylène homopolymère.

**3.** Le film multicouche de la revendication 1 dans lequel au moins une couche de peau comprend du polypropylène copolymère statistique.

**4.** Le film multicouche de la revendication 1 dans lequel chaque couche de peau comprend au moins 80 % de polymère à base de propylène ayant un point de fusion supérieur à 130 °C.

**5.** Le film multicouche de la revendication 1 dans lequel la couche de coeur consiste essentiellement en 100 % de plastomère ou élastomère à base de propylène.

**6.** Le film multicouche de la revendication 1, le film ayant une épaisseur allant de 25 microns à 50 microns.

**7.** Le film multicouche de la revendication 1 dans lequel chaque couche de peau ne constitue pas plus de 5 % de l'épaisseur totale du film.

**8.** Le film multicouche de la revendication 1 dans lequel la couche de peau et/ou la couche de coeur comprennent en outre un ou plusieurs additifs parmi les additifs suivants : des charges inorganiques, des charges conductrices, des pigments, des antioxydants, des agents de balayage d'acide, des agents ignifugeants, des absorbeurs d'ultraviolet, des auxiliaires de transformation, des auxiliaires d'extrusion, des additifs glissants, des modificateurs de perméabilité, des agents antistatiques, des additifs anti-blocs.

**9.** Le film multicouche de la revendication 1 dans lequel la masse volumique globale du film va de 0,8 à 1,0 g/cm$^3$.

**10.** Le film multicouche de la revendication 1, le film étant de préférence orienté soit dans le sens machine, soit dans le sens travers, et l'orientation dans un sens faisant au moins deux fois celle du sens opposé.

**11.** Le film multicouche de la revendication 1, le film ayant une rigidité Gurley dans le sens de l'orientation primaire allant de 10 à 30 unités Gurley.

**12.** Le film multicouche de la revendication 1, le film ayant une tension de rétraction inférieure à 250 psi (1,72 MPa).

**13.** Une étiquette rétractable comprenant un film multicouche de n'importe laquelle des revendications précédentes.

**14.** L'étiquette rétractable de la revendication 13, l'étiquette rétractable étant une étiquette ROSO (applicable-rétractable).

**15.** L'étiquette rétractable de la revendication 13, l'étiquette rétractable étant une étiquette de type manchon.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6906160 B
- US 6919407 B
- US 6927256 B
- US 6960635 B
- US 7250470 B
- US 7250471 B
- US 7344775 B
- US 6010588 A
- US 20080199673 A
- WO 2005090427 A